# EUROPEAN PATENT APPLICATION

(11) **EP 2 487 890 A1**
(43) Date of publication of application: **15.08.2012**
(21) Application number: 11153951.6
(22) Date of filing: 10.02.2011
(51) Int. Cl.: H04M 3/487

(54) **Custom caller message**

(71) Applicant: Kontorsplatsen Business Group AB, 417 55 Göteborg (SE)
(72) Inventor: Tjörnhed, Kim, 416 73, GÖTEBORG (SE)
(74) Representative: Fritsche, Daniel

(57) **Abstract**

It is provided a method for providing an advertising message to a caller (212) requesting a call connection to a receiver through a communication system. The advertising message is selected based on the profile of the calling party and includes interests, hobbies, field of work, location, age and gender so as to make the advertising more effective. In return the call is free or discounted. The method comprising the steps of: establishing an identity of the caller (204); determining if the caller identity is present in a caller database (206) comprising caller identities and caller information of callers which have agreed to receive a message when requesting a call connection; selecting (210), if the caller is present in the caller database, from a message database comprising a plurality of messages, at least one message based on caller information; and providing the message to the caller (212).

## Description

### Field of the Invention

The present invention relates to communication systems. More particularly, the present invention relates to advertisements in communication systems.

### Technical Background

In telephone communication systems, it is known to play a message to a caller instead of the traditional connection tone when a phone call is being connected. Such a message may for example be a hold message or music. The message may also contain commercial information such as a commercial jingle promoting the operator used when making the call.

US5321740 discloses a marketing system for selectively modifying an existing telephone network by introducing a prerecorded announcement replacing either or both of the busy signal and the ringback signal. In US5321740, the prerecorded message to be played is selected by a message generator based on the caller's geographic location and the time of day.

As advertisements are becoming increasingly abundant in many different media, it is important for an advertiser to reach the intended target group for a certain advertisement. In commonly used methods, advertising is done broadly in many different contexts in the hope of reaching the intended audience. However, it is desirable both from an advertiser and a customer point of view to improve advertising methods so as to reduce the amount of inefficient and undesirable advertisements.

### Summary of the Invention

In view of the above-mentioned desired properties of advertising in a communication system, and the above-mentioned and other drawbacks of the prior art, it is an object of the present invention to provide an improved system for providing commercial information to a caller.

According to a first aspect of the present invention, it is therefore provided a method for providing a message to a caller requesting a call connection to a receiver through a communication system, the method comprising the steps of: establishing an identity of the caller; determining if the caller identity is present in a caller database comprising caller identities and caller information associated with callers which have agreed to receive a message when requesting a call connection; selecting, if the caller is present in the caller database, from a message database comprising a plurality of messages, at least one message based on caller information associated with the caller; and providing the message to the caller.

The present invention is based on the realization that commercial messaging in telephone systems may be made more efficient by using a method where the selection of a message is based on caller information. An advantage of using such a method is that the caller will receive information or advertisements which are relevant to the individual caller. Caller information may advantageously be stored in the caller database, but it may also be stored in a separate caller information database or in any other location accessible to the communication system. The caller may submit information directly to the database or to a database administrator in a number of ways such as by answering questionnaires by hand, through the internet or by phone.

A method according to the present invention may advantageously be incorporated in a system where free or discounted telephone services are offered in exchange for listening to commercial messages. Such a system may be arranged in many different ways. There may, for instance, be different service levels or different rates depending on the number of messages that the caller has agreed to receive in a certain time-space. The system may also be arranged to provide a differing number and/or length of messages depending on if the caller is requesting a call connection to a land-line, a mobile phone subscriber or if the call is an international call.

The caller should in the present context be understood as the party originating a request for communication. The caller may be any identifiable entity such as a land line telephone subscriber, a mobile telephone subscriber or any equivalent entity.

The receiver should in the present context be understood as the intended recipient of the communication. The receiver may be any entity such as a land-line telephone subscriber, a mobile telephone subscriber or any equivalent entity. However, the receiver may equally well be an automated answering service, an information service or any similar recipient of a call.

According to one embodiment of the invention, the message database may further comprise information regarding the preferred target group for each message. Such information may be characterized by any number of unique parameters defining a target group.

In one embodiment of the invention, the selection of the message to provide to the caller may be performed by matching the caller information to the preferred target group information. By having information relating each message to the desired target group, it is possible to provide the most suitable message to a caller by comparing and matching message and caller information parameters.

In one embodiment of the invention, caller information and target group information may advantageously comprise information parameters selected from the group comprising caller interests, hobbies, line of work, family status, geographical area, age and gender. However, the caller and target group information may be selected from any parameters characterizing a caller along the lines of the aforementioned.

According to one embodiment of the invention, the caller information and the message information may advantageously have at least two parameters in common for a message to be selected. The matching of caller information and message information may be made in many different ways. As an example, by increasing the number of parameters required to define a match, the relevance of the message to the caller is increased. A simple matching scheme is to simply compare if one or more parameters are similar, thus concluding which caller-message combination has the most common parameters, thereby selecting the message. However, more advanced matching schemes may be employed such as a weighting scheme where some parameters are considered more important to either the caller or the advertiser. Furthermore, another parameter influencing the matching procedure may be the caller history. By controlling and storing information about previously provided messages it can be avoided that the same message is provided twice in a row. This can for example be achieved by defining a certain number of messages that must be provided before a message is repeated or a minimum time before repeating a message may be set.

According to one embodiment of the invention, at least one message may be provided to the caller prior to connecting the call to the receiver.

It may be desirable to be able to provide at least one message to the caller regardless of the length of the waiting time before the call is received. For example, if the receiver answers the call directly of if the caller terminates the call in response to a busy signal there may not be sufficient time to provide a full message. "Prior to connecting the call" should in the present context be understood as the time before a switch or any similar device performing a switching or routing function attempts to connect the call to the receiver.

In one embodiment of the invention, at least part of the at least one message being provided to the caller while the call is being connected to the receiver may be provided until the receiver answers the call.

In one embodiment of the invention, at least one message may be played to the caller if the receiver is busy. As it may be desirable to provide at least one message to the caller even if the call is not completed, this may be achieved by providing a message to the caller prior to notifying the caller that the receiver is busy.

According to one embodiment of the invention, the communication system may be a telephone system selected from the group comprising land-line, mobile, internet, satellite and video telephone systems. The person skilled in the art readily realizes that the present invention may be used in any form of telephone communication system such as the ones listed above or any present or future systems performing similar functions.

In one embodiment of the invention, the step of establishing an identity of a caller may include the step of prompting the caller to provide input in response to a question. It may be advantageous to receive an input from the caller to accurately establish or verify an identity of a caller. As an example, a phone may have several different users with different user profiles. By prompting the user in a way so that the specific user is identified it is possible to provide the most suitable message. User profiles may be treated as subcategories to the caller identity or they may be treated as different caller identities. In the latter case it may be possible to have several users using the same phone while still having different user profiles or service levels. It is thus also possible to have a caller identity where some of the users do not receive any messages.

According to a second aspect of the present invention, it is provided a system for providing a message to a caller requesting a call connection to a receiver through a communication system, the system comprising: means for establishing an identity of the caller; a caller database comprising caller identities of callers which have agreed to receive a message when requesting a call; means for determining if the caller is present in the caller database; means for selecting, based on caller information, at least one message from a message database comprising a plurality of messages; and means for providing the message to the caller.

Effects and features of this second aspect of the present invention are largely analogous to those described above in connection with the first aspect of the invention.

The means for establishing the identity of a caller may for example be any switch or router used in a communication system or any of a range of similar devices known to the person skilled in the art performing the desired functions.

The caller database and message database may be provided in the caller switch. However, the databases may equally well be provided as separate entities in the communication system or as external resources addressable by and in connection with the caller switch.

The selection means may include a microprocessor, microcontroller, programmable digital signal processor or another programmable device. The selection means may also, or instead, include an application specific integrated circuit, a programmable gate array or programmable array logic, a programmable logic device, or a digital signal processor. Where the selection means includes a programmable device such as the microprocessor, microcontroller or programmable digital signal processor mentioned above, the processor may further include computer executable code that controls operation of the programmable device.

### Brief Description of the Drawings

These and other aspects of the present invention will now be described in more detail with reference to the appended drawings showing a currently preferred embodiment of the invention, wherein:
Fig. 1 schematically illustrates a communication system according to an embodiment of the invention; and
Fig. 2 schematically illustrates a method for providing a message according to an embodiment of the invention.

### Detailed Description of Preferred Embodiments of the Invention

In the present detailed description, various embodiments of a method for providing a message in a communication system according to the present invention are mainly discussed with reference to a system for telephone communication. It should be noted that this by no means limits the scope of the present invention which is equally applicable to other forms of communication systems.

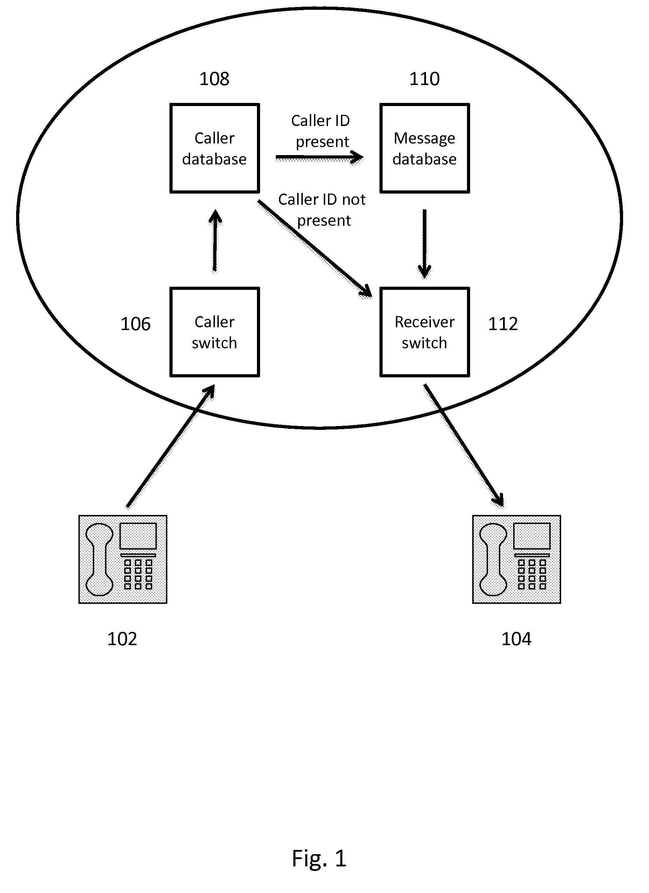

Fig. 1 schematically illustrates a communication system 100 according to an embodiment of the present invention. The communication system 100, here a system for telephone communication, comprises a caller switch 106 to which the caller 102 connects when requesting a call connection to a receiver 104. Furthermore, the communication system 100 also includes a caller database 108, a message database 110 and a receiver switch 112.

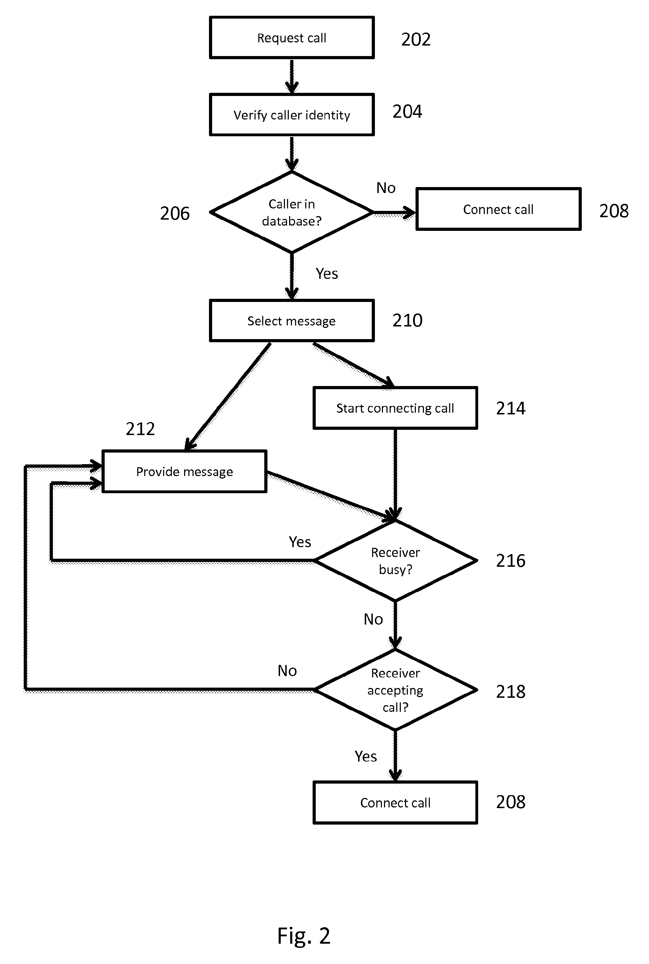

A method according to various embodiments of the present invention will now be described with reference to the system shown in Fig.1 and the flow-chart shown in Fig 2 outlining the general method steps for a method for providing a message in a telephone communication system.

In a first step 202, the caller 102 requests a call by entering the phone number of a desired receiver 104.

In the next step 204, the identity of the caller is verified by the caller switch 106 and a comparison is made 206 as to whether the caller is in the caller database 108 comprising callers which have agreed to receive a message. If the caller identity is not present in the database, the call is connected 208 to the receiver 104.

If the caller 102 is present in the caller database 108, the message to be provided is selected 210 by comparing and matching caller information parameters to message target group information parameters from the caller database 108 and the message database 110, respectively. Once a suitable message is found, the message is played to the caller 212 as an audio message. Additionally, when a message is selected the call is being connected 214 to the receiver 104.

In the following step 216, if the receiver is busy, the message continues to be played. If the message is completed before the caller 102 terminates the call, one or more messages may be played until the call is terminated by the caller 102 or until a predetermined time-limit is reached.

In the case when the receiver 104 is not busy 218, the message is played until the receiver 104 is answering the call or until the call is terminated by the caller 102. If the receiver 104 answers the call, the message is terminated and the call is connected 208.

The person skilled in the art realizes that the present invention by no means is limited to the preferred embodiments described above. On the contrary, many modifications and variations are possible within the scope of the appended claims. For example, the general idea of the invention may readily be implemented for other types of communication such as mobile phone text messaging or in systems for computer communication as a way to provide free or discounted services.

## Claims

1. A method for providing a message to a caller (102) requesting a call connection to a receiver (104) through a communication system (100), the method comprising the steps of:
establishing an identity of the caller (102);
determining if the caller identity is present in a caller database (108) comprising caller identities associated with callers which have agreed to receive a message when requesting a call connection;
selecting, if the caller is present in the caller database, from a message database (110) comprising a plurality of messages, at least one message based on caller information associated with said caller; and
providing said message to the caller (102).

2. The method according to claim 1, wherein the message database (110) comprises information regarding the preferred target group for each message.

3. The method according to any one of the preceding claims, wherein the selection of the message to provide to the caller (102) is performed by matching the caller information to the preferred target group information.

4. The method according to claim 2 or 3, wherein caller information and target group information comprises information parameters selected from the group comprising caller interests, hobbies, line of work, family status, geographical area, age and gender.

5. The method according to claim 3 or 4, wherein the caller information and the message information must have at least two parameters in common for a message to be selected.

6. The method according to any one of the preceding claims, wherein the at least one message is provided to the caller prior to connecting the call to the receiver (104).

7. The method according to any one of the preceding claims, wherein at least part of the at least one message being provided to the caller (102) while the call is being connected to the receiver (104) is provided until the receiver answers the call.

8. The method according to any one of the preceding claims, wherein at least one message is played to the caller (102) if the receiver (104) is busy.

9. The method according to any one of the preceding claims, wherein the communication system (100) is a telephone system selected from the group comprising land-line, mobile, internet, satellite and video telephone systems.

10. The method according to any one of the preceding claims, wherein the step of establishing an identity of a caller (102) includes the step of prompting the caller (102) to provide input in response to a question.

11. A system for providing a message to a caller requesting a call connection to a receiver through a communication system (100), the system comprising:
means for establishing an identity of the caller (102);
a caller database (108) comprising caller identities of callers which have agreed to receive a message when requesting a call;
means for determining if the caller is present in the caller database;
means for selecting, based on caller information, at least one message from a message database (110) comprising a plurality of messages; and
means for providing said message to the caller.

12. The system according to claim 11, wherein the message database (110) comprises information regarding the preferred target group for each message.

13. The system according to claim 11 or 12, wherein caller information in the caller database and target group information in the message database comprises information parameters selected from the group comprising caller interests, hobbies, line of work, family status, geographical area, age and gender.

14. The method according to any one of claims 11 to 13, wherein the communication system (100) is a telephone system selected from the group comprising land-line, mobile, internet, satellite and video telephone systems.
